# EUROPEAN PATENT APPLICATION

(11) **EP 2 884 142 A1**
(43) Date of publication of application: **17.06.2015**
(21) Application number: 13879407.8
(22) Date of filing: 11.06.2013
(51) Int. Cl.: F16K 31/02, B81B 3/00, F16K 7/17, F16K 31/126, G01N 37/00

(54) **FLUID HANDLING DEVICE AND FLUID HANDLING METHOD**

(30) Priority: 13.08.2012 JP 2012179290; 16.04.2013 JP 2013085569
(71) Applicant: Enplas Corporation, Kawaguchi-shi, Saitama 332-0034 (JP)
(72) Inventor: ONO, Koichi, Kawaguchi-shi, Saitama 332-0034 (JP)
(74) Representative: Epping - Hermann - Fischer
(86) International application number: PCT/JP2013/003651
(87) International publication number: WO 2014/027435

(57) **Abstract**

This fluid handling device (micro fluid chip (100)) comprises a first chip (110) and a second chip (120). The first chip (110) includes: a first base plate (111); a first channel (113); a second channel (114); and a partition wall (116) and a first film (112), which are disposed between the channels. The second chip (120) includes: a second base plate (121); a third channel (123); first and second electrodes (131, 132) disposed in the third channel (123); a fourth channel (124); third and fourth electrodes (133, 134) disposed in the fourth channel (124); a pressure chamber (129) disposed between the third and fourth channels (123, 124); and a second film (122). The first chip (110) and the second chip (120) are superimposed on each other so that the partition wall (116) and the pressure chamber (129) face each other.

## Description

### Technical Field

The present invention relates to a fluid handling device for use in analyzing and processing a liquid sample, and a fluid handling method.

### Background Art

In recent years, microchannel chips have been used to analyze a minute amount of materials such as protein and nucleic acid with high precision and at a high speed. Microchannel chips advantageously allow the amount of reagents or samples to be small, and are expected to be used for various applications such as laboratory tests, food tests, and environment tests.

It has been proposed to provide a valve structure in a microchannel chip to automate the process using the microchannel chip (see, for example, PTL 1).

PTL 1 discloses a microchannel chip having a micro valve of a diaphragm-valve structure in which a port of a fluid channel is opened and closed by a film. In this microchannel chip, there are formed a first chip having a fluid channel, a fluid port that opens at a wall of the channel and a film that covers the channel and the fluid port, and a second chip including an actuator that pushes the film toward the fluid port of the first chip. The first chip and the second chip can be separated. The above actuator is an air supply device or a piezo element. The actuator pushes the film toward the fluid port, thereby allowing the fluid port to be closed. The pushing by the actuator is released, thereby allowing the fluid port to be opened. Such opening and closing of the fluid port enable the control of the fluid flow in the channel.

### Citation List

### Patent Literature

PTL 1
Japanese Patent Application Laid-Open No. 2002-228033

### Summary of Invention

### Technical Problem

However, the microchannel chip set forth in PTL 1 has a problem in which the size of an inspection device that uses the microchannel chip is larger. That is, in the technique set forth in PTL 1, the inspection device needs to include the actuator or a device for driving the actuator. Therefore, it is difficult to further decrease the size of the inspection device or further simplify the test device.

An object of the present invention is to provide a fluid handling device capable of handling fluid without requiring an external mechanical force, and a fluid handling method using the fluid handling device.

### Solution to Problem

A fluid handling device of the present invention includes: a first chip including a first substrate having a first groove on one surface, a first film bonded on the one surface of the first substrate, and a partition wall disposed inside a fluid channel composed of the first film and the first groove; and a second chip including a second substrate having on one surface a second groove and a recess to be in communication with the second groove, a second film bonded on the one surface of the second substrate, and at least a pair of areas to which a voltage can be applied in a longitudinal direction of a liquid channel composed of the second film and the second groove, wherein the first chip and the second chip are stacked such that the partition wall of the first chip and the recess of the second chip face each other across the first film and the second film, and when a voltage is applied to liquid between the at least a pair of areas inside the liquid channel, the second film that covers the recess and the first film that faces the second film are pushed toward the partition wall of the first chip by the liquid that flows into the recess of the second chip due to electroosmotic flow, and the first film contacts the partition wall of the first chip so as to close the fluid channel.

Another fluid handling device of the present invention includes: a first chip including a first substrate having a first groove on one surface, a first film made of resin bonded on the one surface of the first substrate, and a partition wall disposed inside a fluid channel composed of the first film and the first groove; and a second chip including a second substrate having on one surface a second groove and a recess to be in communication with the second groove, a second film made of elastomer bonded on the one surface of the second substrate, and at least a pair of areas to which a voltage can be applied in a longitudinal direction of a liquid channel composed of the second film and the second groove, wherein the first chip and the second chip are stacked such that the partition wall of the first chip and the recess of the second chip face each other across the first film and the second film, and when a voltage is applied to liquid between the at least a pair of areas inside the liquid channel, the liquid flows out of the recess of the second chip due to electroosmotic flow and an inside of the recess of the second chip is made to have a negative pressure to cause the second film that covers the recess to be sucked into the recess and to cause the first film to be curved toward the recess, and a gap is formed between the first film and the partition wall of the first chip so as to open the fluid channel.

A fluid handling method of the present invention is a method of handling fluid using the fluid handling device, including: introducing fluid into the fluid channel; and applying a voltage to liquid between the at least a pair of areas inside the liquid channel to allow the liquid to flow into the recess due to electroosmotic flow, wherein the liquid that flows into the recess pushes the second film that covers the recess and the first film that faces the second film toward the partition wall, and the first film contacts the partition wall so as to close the fluid channel.

Another fluid handling method of the present invention is a method of handling fluid using the fluid handling device, including: introducing fluid into the fluid channel; and applying a voltage to liquid between the at least a pair of areas inside the liquid channel to allow the liquid to flow out of the recess due to electroosmotic flow to cause an inside of the recess to have a negative pressure, wherein the negative pressure inside the recess causes the second film that covers the recess to be sucked into the recess and to cause the first film to be curved toward the recess, and a gap is formed between the first film and the partition wall so as to open the fluid channel.

### Advantageous Effects of Invention

The present invention can provide a fluid handling device capable of handling fluid without requiring an external mechanical force, and a fluid handling method using the fluid handling device.

### Brief Description of Drawings

FIG. 1A is a plan view of a microchannel chip according to a first embodiment of the present invention, FIG. 1B is a sectional view taken along line B-B illustrated in FIG. 1A, and FIG. 1C is a sectional view taken along line C-C illustrated in FIG. 1A;
FIG. 2A is a plan view of a first substrate, FIG. 2B is a sectional view taken along line B-B illustrated in FIG. 2A, and FIG. 2C is a sectional view taken along line C-C illustrated in FIG. 2A;
FIG. 3A is a plan view of a second substrate, FIG. 3B is a sectional view taken along line B-B illustrated in FIG. 3A, and FIG. 3C is a sectional view taken along line C-C illustrated in FIG. 3A;
FIG. 4A is a plan view of a first film, FIG. 4B is a sectional view taken along line B-B illustrated in FIG. 4A, and FIG. 4C is a sectional view taken along line C-C illustrated in FIG. 4A;
FIG. 5A is a plan view of a second film, FIG. 5B is a sectional view taken along line B-B illustrated in FIG. 5A, and FIG. 5C is a sectional view taken along line C-C illustrated in FIG. 5A;
FIG. 6A is an enlarged view illustrating an area E of FIG. 1C, and FIG. 6B is an enlarged view illustrating an area D of FIG. 1B;
FIGS. 7A and 7B are partially enlarged sectional views of the microchannel chip for explaining the modes for using the microchannel chip;
FIGS. 8A and 8B are partially enlarged sectional views of microchannel chip for explaining the modes for using the microchannel chip;
FIG. 9A is a plan view of a microchannel chip according to a second embodiment, FIG. 9B is a sectional view taken along line B-B illustrated in FIG. 9A, and FIG. 9C is a sectional view taken along line C-C illustrated in FIG. 9A;
FIG. 10A is a plan view of a microchannel chip according to a third embodiment, FIG. 10B is a sectional view taken along line B-B illustrated in FIG. 10A, and FIG. 10C is a sectional view taken along line C-C illustrated in FIG. 10A;
FIG. 11A is a plan view of a microchannel chip according to a fourth embodiment, FIG. 11B is a sectional view taken along line B-B illustrated in FIG. 11A, and FIG. 11C is a sectional view taken along line C-C illustrated in FIG. 11A;
FIG. 12A is a plan view of a microchannel chip according to a fifth embodiment, FIG. 12B is a sectional view taken along line B-B illustrated in FIG. 12A, FIG. 12C is a sectional view taken along line C-C illustrated in FIG. 12A, and FIG. 12D is a sectional view taken along line D-D illustrated in FIG. 12A;
FIG. 13A is a plan view of a microchannel chip according to a sixth embodiment, and FIG. 13B is a sectional view taken along line B-B illustrated in FIG. 13A;
FIGS. 14A, 14B and 14C are sectional views for explaining the modes for using the microchannel chip according to the sixth embodiment as a pump;
FIG. 15A is a plan view of a microchannel chip according to a seventh embodiment, FIG. 15B is a sectional view taken along line B-B illustrated in FIG. 15A, FIG. 15C is a sectional view taken along line C-C illustrated in FIG. 15A, and FIG. 15D is a sectional view taken along line D-D illustrated in FIG. 15A; and
FIG. 16A is a plan view of a microchannel chip according to an eighth embodiment, FIG. 16B is a sectional view taken along line B-B illustrated in FIG. 16A, FIG. 16C is a sectional view taken along line C-C illustrated in FIG. 16A, and FIG. 16D is a sectional view taken along line D-D illustrated in FIG. 16A.

### Description of Embodiments

In the following, embodiments of the present invention will be described in detail with reference to the accompanying drawings. In the following description, a microchannel chip will be described as a typical example of a fluid handling device of the present invention.

### [Configuration of Microchannel Chip 100]

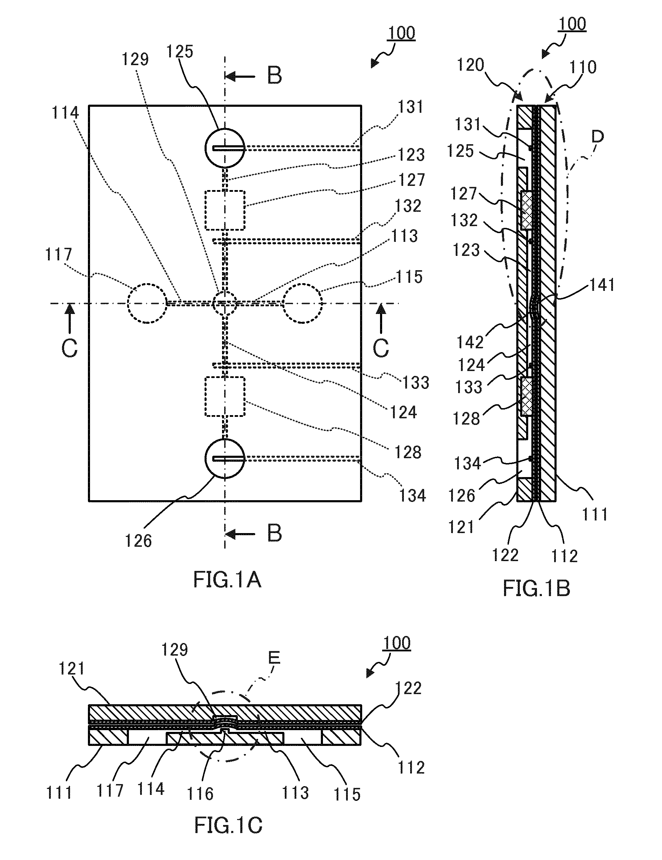

FIGS. 1A, 1B and 1C are drawings illustrating a configuration of microchannel chip 100 according to an embodiment of the present invention. FIG. 1A is a plan view of microchannel chip 100, FIG. 1B is a sectional view taken along line B-B illustrated in FIG. 1A, and FIG. 1C is a sectional view taken along line C-C illustrated in FIG. 1A.

As illustrated in FIGS. 1A to 1C, microchannel chip 100 has first chip 110 and second chip 120. First chip 110 and second chip 120 are overlapped. In this case, first film 112 and second film 122 face each other. Further, partition wall 116 of first chip 110 and pressure chamber 129 of second chip 120 face each other across first film 112 and second film 122.

First chip 110 is a chip for allowing fluid such as a reagent or a liquid sample to flow. First film 112 functions as a diaphragm (valve element) of a micro valve that controls the fluid flow in first chip 110.

Second chip 120 functions as an actuator of the micro valve. Second chip 120 either may contact first chip 110 or may be apart from first chip 110 as long as second chip 120 functions as an actuator.

### (First Chip)

First chip 110 includes first substrate 111, first film 112, first channel 113, second channel 114, first fluid inlet 115, partition wall 116, fluid outlet 117 and diaphragm part 141. First film 112 is bonded on one surface of first substrate 111.

First channel 113 and second channel 114 form a fluid channel. Partition wall 116 and diaphragm part 141 allows first channel 113 and second channel 114 to be in communication with each other when the micro valve is opened. At that time, the fluid introduced from first fluid inlet 115 can flow to fluid outlet 117. The fluid is, for example, a reagent or a liquid sample.

The sectional areas and the sectional shapes of first channel 113 and second channel 114 are not particularly limited. For example, first channel 113 and second channel 114 are channels in which fluid can move by capillary action. In this case, the sectional shapes of first channel 113 and second channel 114 are substantially rectangular, for example, with a length of sides (width and depth) of about several tens of micrometers. As used herein, the "section of a channel" means a section of a channel orthogonal to the flow direction of fluid.

First fluid inlet 115 is disposed at one end of first channel 113. Fluid outlet 117 is disposed at one end of second channel 114. While the shapes of first fluid inlet 115 and fluid outlet 117 are not particularly limited, they may have a substantially cylindrical shape, for example. While the diameters of first fluid inlet 115 and fluid outlet 117 are not particularly limited, they may have a diameter of about 2 mm, for example.

Partition wall 116 is a wall disposed between first channel 113 and second channel 114. As described later, partition wall 116 functions as a valve seat of the micro valve. The shape of partition wall 116 is, for example, rectangular when viewed in a plan view. The planar shape and the size of partition wall 116 can be determined within such a range that partition wall 116 functions as the valve seat of the micro valve.

### (Second Chip)

Second chip 120 includes second substrate 121, second film 122, third channel 123, fourth channel 124, second fluid inlet 125, third fluid inlet 126, first porous part 127, second porous part 128, pressure chamber 129, first electrode 131, second electrode 132, third electrode 133, fourth electrode 134 and diaphragm part 142. Second film 122 is bonded on one surface of second substrate 121. Third channel 123, fourth channel 124, first porous part 127 and second porous part 128 form a liquid channel.

Third channel 123 and fourth channel 124 are channels that receive liquid. Third channel 123 and fourth channel 124 are channels in which fluid can move by capillary action, for example. The sectional areas and the sectional shapes of third channel 123 and fourth channel 124 are not particularly limited. For example, the sectional shapes of third channel 123 and fourth channel 124 are substantially rectangular, for example, with a length of sides (width and depth) of about several tens of micrometers.

Third channel 123 is in communication with second fluid inlet 125 at one end. Fourth channel 124 is in communication with third fluid inlet 126 at one end. While the shapes of second fluid inlet 125 and third fluid inlet 126 are not particularly limited, they may have a substantially cylindrical shape, for example. While the diameters of second fluid inlet 125 and third fluid inlet 126 are not particularly limited, they may have a diameter of about 2 mm, for example.

First porous part 127 constitutes a part of third channel 123, and second porous part 128 constitutes a part of fourth channel 124. First porous part 127 and second porous part 128 include a large number of fine channels formed of a plurality of voids being in communication with one another. While the shapes of first porous part 127 and second porous part 128 are not particularly limited, they may have a quadrangular prism shape, for example. While the sizes of first porous part 127 and second porous part 128 are not particularly limited, they may have a size of about 2 mm×2 mm×1 mm, for example.

Pressure chamber 129 is in communication with third channel 123 and fourth channel 124. Third channel 123 is in communication with pressure chamber 129 at the end opposite to second fluid inlet 125, and fourth channel 124 is in communication with pressure chamber 129 at the end opposite to third fluid inlet 126. Pressure chamber 129 has such a size as to house diaphragm part (non-joint part) 142 of second film 122 described later. While the shape of pressure chamber 129 is not particularly limited, it may have a substantially cylindrical shape, for example. While the diameter of pressure chamber 129 is not particularly limited, it may have a diameter of about 1 mm, for example. While the depth of pressure chamber 129 is not particularly limited, it may have the same depth as those of third channel 123 and fourth channel 124, for example.

### (First Substrate)

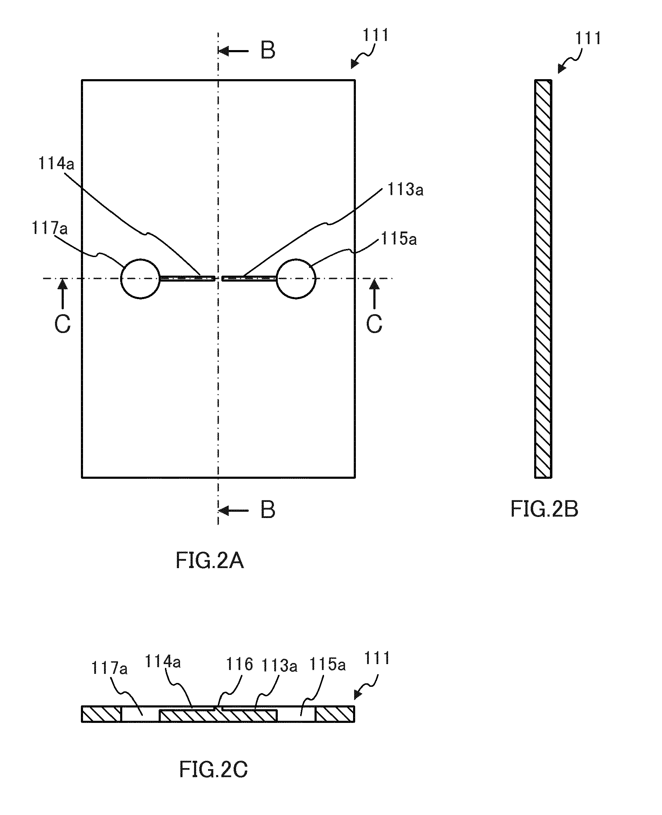

FIGS. 2A, 2B and 2C are drawings illustrating the configuration of first substrate 111. FIG. 2A is a plan view of first substrate 111, FIG. 2B is a sectional view taken along line B-B illustrated in FIG. 2A, and FIG. 2C is a sectional view taken along line C-C illustrated in FIG. 2A.

First substrate 111 is a substantially rectangular transparent resin substrate. While the thickness of first substrate 111 is not particularly limited, it may have a thickness of 1 to 10 mm, for example. The type of the resin forming first substrate 111 is not particularly limited, and the resin may be appropriately selected from known resins. Examples of the resin forming first substrate 111 include polyethylene terephthalate, polycarbonate, polymethylmethacrylate, vinyl chloride, polypropylene, polyether, polyethylene, polystyrene, glass, silicone resin, and elastomer.

As illustrated in FIGS. 2A to 2C, first substrate 111 has first groove 113a, second groove 114a, first through-hole 115a and second through-hole 117a. First groove 113a is in communication with first through-hole 115a. Second groove 114a is in communication with second through-hole 117a. Partition wall 116 is formed between first groove 113a and second groove 114a.

The opening of first groove 113a and the opening of second groove 114a are sealed with first film 112, thereby forming first channel 113 and second channel 114. One opening of first through-hole 115a and one opening of second through-hole 117a are sealed with first film 112, thereby forming first fluid inlet 115 and fluid outlet 117 (see FIG. 1C).

### (Second Substrate)

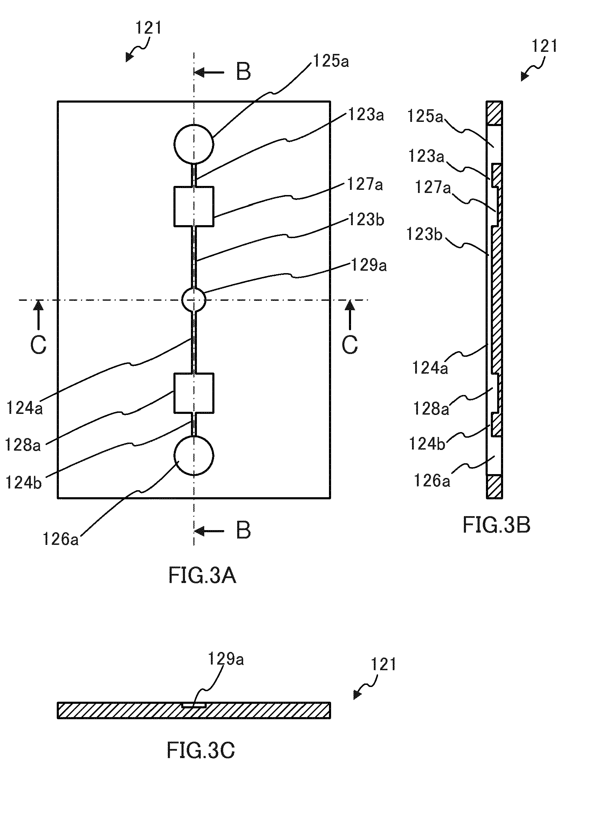

FIGS. 3A, 3B and 3C are drawings illustrating the configuration of second substrate 121. FIG. 3A is a plan view of second substrate 121, FIG. 3B is a sectional view taken along line B-B illustrated in FIG. 3A, and FIG. 3C is a sectional view taken along line C-C illustrated in FIG. 3A.

Second substrate 121 is a substantially rectangular transparent resin substrate. While the thickness of second substrate 121 is not particularly limited, it may have a thickness of 1 to 10 mm, for example. The type of the resin forming second substrate 121 is not particularly limited, and the resin may be appropriately selected from known resins. Examples of the resin forming second substrate 121 are the same as the examples of the resin forming first substrate 111.

As illustrated in FIGS. 3A to 3C, second substrate 121 has third groove 123a, fourth groove 123b, fifth groove 124a, sixth groove 124b, third through-hole 125a, fourth through-hole 126a, first recess 129a, second recess 127a, and third recess 128a. The planar shape of first recess 129a is circular, for example. The planar shapes of second recess 127a and third recess 128a are rectangular, for example.

Third groove 123a is in communication with third through-hole 125a at one end, and at the other end with second recess 127a. Fourth groove 123b is in communication with second recess 127a at one end, and at the other end with first recess 129a. Fifth groove 124a is in communication with first recess 129a at one end, and at the other end with third recess 128a. Sixth groove 124b is in communication with third recess 128a at one end, and at the other end with fourth through-hole 126a.

The opening of third groove 123a and the opening of fourth groove 123b are sealed with second film 122, thereby forming third channel 123. The opening of fifth groove 124a and the opening of sixth groove 124b are sealed with second film 122, thereby forming fourth channel 124. One opening of third through-hole 125a and one opening of fourth through-hole 126a are sealed with second film 122, thereby forming second fluid inlet 125 and third fluid inlet 126. The opening of first recess 129a is sealed with second film 122, thereby forming pressure chamber 129. The opening of second recess 127a and the opening of third recess 128a are sealed with second film 122, thereby forming a chamber for first porous part 127 and a chamber for second porous part 128 (see FIG. 1B).

First porous part 127 and second porous part 128 are formed by filling the chambers with resin beads or glass beads. The chambers may house a porous body made of an inorganic oxide or a resin instead of beads. First porous part 128 and second porous part 128 that are composed of beads or porous body include a large number of fine channels formed of a plurality of voids being in communication with one another.

The average particle diameter of beads is 20 µm, for example. Examples of the material for the resin beads include polyethylene terephthalate, polycarbonate, polymethylmethacrylate, vinyl chloride, polypropylene, polyether, polyethylene, polystyrene, silicone resin, and elastomer. Examples of the porous body made of an inorganic oxide include monolithic silica (porous silica molded body) and a honeycomb structure having a surface made of an inorganic oxide. Examples of the porous body made of resin include a porous body prepared by bonding resin beads to one another.

### (First Film)

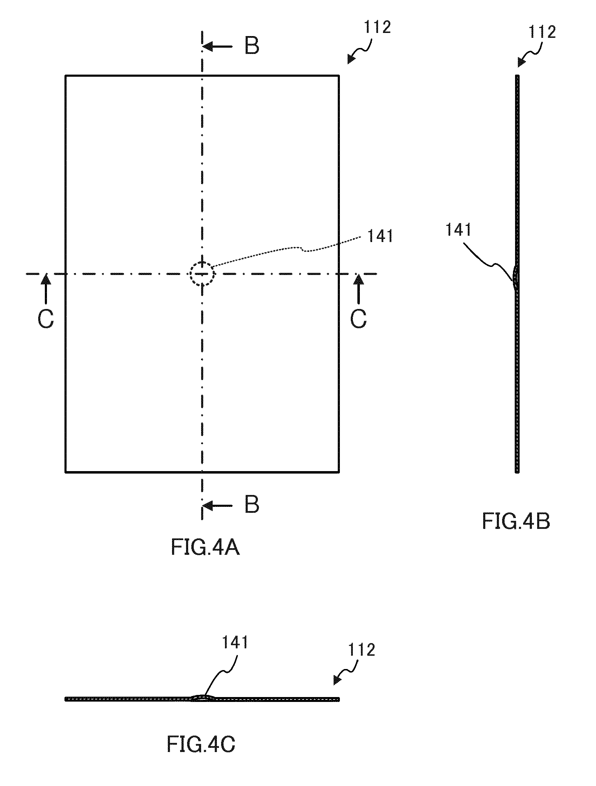

FIGS. 4A, 4B and 4C are drawings illustrating the configuration of first film 112. FIG. 4A is a plan view of first film 112, FIG. 4B is a sectional view taken along line B-B illustrated in FIG. 4A, and FIG. 4C is a sectional view taken along line C-C illustrated in FIG. 4A.

First film 112 is a substantially rectangular transparent resin film. First film 112 includes diaphragm part 141. Diaphragm part 141 is disposed at the center of first film 112. Diaphragm part 141 has a substantially hemispherical shape. First film 112 functions as a valve element (diaphragm) of a micro valve of a diaphragm structure.

The type of the resin forming first film 112 is not particularly limited as long as first film 112 can function as a valve element (diaphragm), and the resin may be appropriately selected from known resins. Examples of the resin forming first film 112 are the same as the examples of the resin forming first substrate 111. From the viewpoint of enhancing the adhesion between first film 112 and first substrate 111, the resin forming first film 112 is preferably the same as the resin forming first substrate 111.

The thickness of first film 112 is not particularly limited as long as first film 112 can function as a valve element (diaphragm), and the thickness thereof may be appropriately set depending on the types (rigidity) of resins. For example, the thickness of first film 112 is about 20 µm. Diaphragm part 141, for example, has such a size as to cover partition wall 116, and as to be housed in pressure chamber 129 when first chip 110 and second chip 120 are overlapped.

### (Second Film)

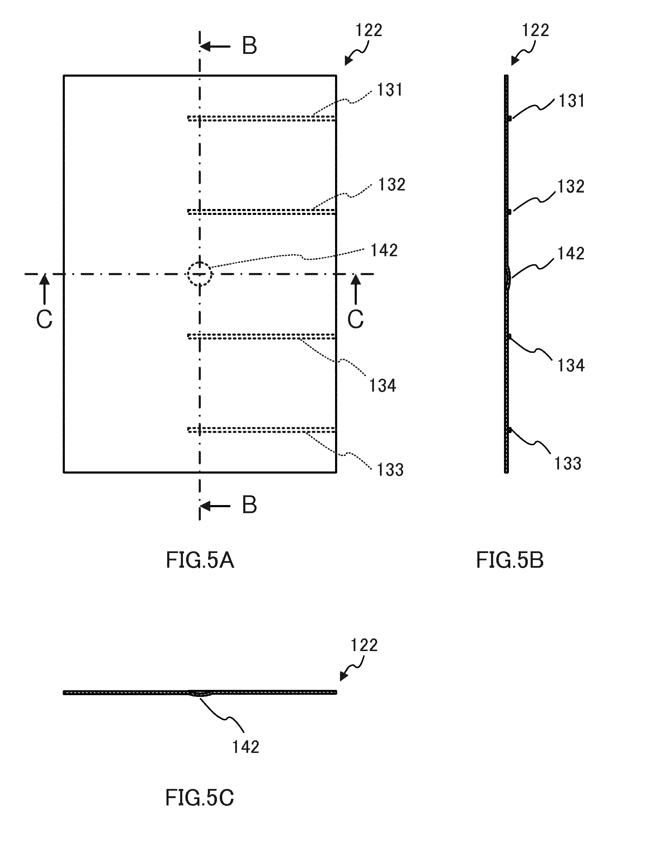

FIGS. 5A, 5B and 5C are drawings illustrating the configuration of second film 122. FIG. 5A is a plan view of second film 122, FIG. 5B is a sectional view taken along line B-B illustrated in FIG. 5A, and FIG. 5C is a sectional view taken along line C-C illustrated in FIG. 5A.

Second film 122 is a substantially rectangular transparent resin film. Second film 122 has diaphragm part 142, and four electrodes of first electrode 131, second electrode 132, third electrode 133 and fourth electrode 134. Diaphragm part 142 is disposed at the center portion of second film 122. Diaphragm part 142 has a substantially hemispherical shape. Second film 122 functions as a valve element (diaphragm) of a micro valve of a diaphragm structure.

The types of the resin forming second film 122 and the thickness of second film 122 are the same as those of first film 122, for example. Further, the size of diaphragm part 142 is also substantially the same as the size of diaphragm part 141. The resin material for second film 122 is preferably a resin other than elastomer, because the electrode to be described later can be produced by screen printing when the resin material is a resin other than elastomer. Further, the resin other than elastomer is also preferable from the viewpoint of producing microchannel chips at lower costs.

First electrode 131, second electrode 132, third electrode 133 and fourth electrode 134 are adhered to a surface from which diaphragm part 142 is protruded, of the surfaces of second film 122. All of first electrode 131, second electrode 132, third electrode 133 and fourth electrode 134 are an elongate conductive thin film (e.g., conductive ink layer such as carbon ink layer, or thin metal film). Every one end of these electrodes is at the edge of one side of second film 122.

The other end of first electrode 131 is exposed to second fluid inlet 125. The other end of second electrode 132 is exposed to a position between first porous part 127 and pressure chamber 129 in third channel 123.

The other end of third electrode 133 is exposed to third fluid inlet 126. The other end of fourth electrode 134 is exposed to a position between second porous part 128 and pressure chamber 129 in fourth channel 124.

Thus, four electrodes of first electrode 131, second electrode 132, third electrode 133 and fourth electrode 134 are disposed at positions different from one another in the longitudinal direction of third channel 123 and in the longitudinal direction of fourth channel 124. That is, first electrode 131 and second electrode 132 are disposed respectively at a pair of areas (voltage application area) to which a voltage can be applied in the longitudinal direction of third channel 123. Likewise, each of third electrode 133 and fourth electrode 134 is disposed at a pair of areas (voltage application area) to which a voltage can be applied in the longitudinal direction of fourth channel 124. In the present invention, the "voltage application area" is not limited to an area inside a channel. The "voltage application area" includes, for example, a fluid inlet or a pressure chamber, other than the above-mentioned channels.

It is noted that an electrode does not need to be formed in the voltage application area. For example, when the voltage application area is a fluid inlet, the similar effect can also be obtained by disposing a rod-like electrode in the voltage application area when using the microchannel chip.

### [Production of Microchannel Chip]

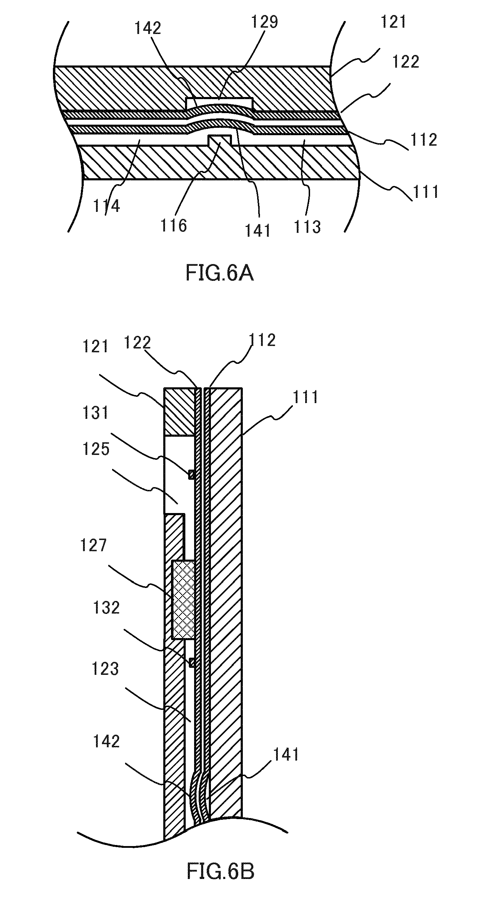

First chip 110 is produced by joining first film 112 to first substrate 111 by thermocompression bonding. A surface including a concave diaphragm part, of the surfaces of first film 112, and the above-mentioned one surface of first substrate 111 are joined (see FIGS. 1A, 1B and 1C, and 6A).

Second chip 120 is produced through, for example, production of a porous part, joining of second film 122, surface treatment of channels and injection of liquid.

In the production of the porous parts, second recess 127a and third recess 128a of second substrate 121 are filled with resin beads. Second recess 127a and third recess 128a are filled with resin beads in such an amount as to form a large number of fine channels in first porous part 127 and second porous part 128. Instead of the filling with resin beads, it is also possible to house a porous body in the above recesses.

Next, second film 122 on which four electrodes 131 to 134 are formed is joined to second substrate 121 by thermocompression bonding. A surface having the above electrodes, of the surfaces of second film 122, is joined to the above-mentioned one surface of second substrate 121 (see FIGS. 1A, 1B and 1C, and 6B).

It is noted that the porous part can be formed even after second film 122 is joined to second substrate 121. For example, the particle diameter of resin beads, the depth and width of fourth groove 123b, the depth and width of fifth groove 124a, and the depth and width of sixth groove 124b are adjusted in advance such that resin beads remain in a necessary amount for each of second recess 127a and third recess 128a, so as to produce second chip 120. Next, resin beads and liquid are introduced from second fluid inlet 125. Then, the introduced resin beads are guided downstream by the liquid injected into second fluid inlet 125. The resin beads introduced from second fluid inlet 125 are received by second recess 127a. Resin beads having smaller particle diameter are further carried to third recess 128a. Thus, even after second film 122 is adhered to second substrate 121, it is possible to fill second recess 127a and third recess 128a with resin beads.

Further, the resin beads filled into second recess 127a and third recess 128a may be joined to each other with heat to give a porous body. That is, second recess 127a and third recess 128a are filled in advance with resin beads having a glass transition temperature (Tg2) lower than a glass transition temperature (Tg1) that is the lower one of the two glass transition temperatures of second substrate 121 and second film 122. Then, second chip 120 after the filling of resin beads is heated at a temperature lower than Tg1 and higher than Tg2. Thus, it is also possible to join resin beads to one another at points to give a porous body.

Next, the surface of a liquid channel in second chip 120 is made ionic. Such an ionic surface can be formed by producing on a surface of the liquid channel a thin film made of silicon oxide, aluminum oxide, titanium oxide, or the like. Such a thin film can be suitably formed by, for example, chemical vapor deposition (CVD) method, atomic layer deposition (ALD) method, or the like. For example, second chip 120 is set in a chamber of a CVD apparatus. Then, the chamber is vacuumed , and SiCl₄ as a precursor gas and pyridine as a catalyst are injected into the chamber. Thereafter, the gas inside the chamber is discharged to evacuate the air in the chamber. Then, water as an oxidation source and pyridine as a catalyst are injected into the chamber. Through the above operations, the entire liquid channels from second fluid inlet 125 to third fluid inlet 126 in second chip 120 are covered with silicon dioxide (SiO₂) at a high speed and at a low temperature.

Other than the operations described above, trimethyl aluminum may be injected as a precursor gas, and water may be injected as an oxidation source, thereby covering the entire channel with aluminum oxide. Alternatively, titanium tetrachloride (TiCl₄) may be injected as a precursor gas, and water may be injected as an oxidation source, thereby covering the entire channels with titanium oxide.

Through such thin film-forming operations, it is possible to form a thin film such as silicon oxide also in a minute part such as the fine channels in the above-mentioned porous structure. The CVD method and the ALD method can be carried out when there exists at least one opening (e.g., second liquid inlet 125, or the like) in the liquid channel. Therefore, it is possible to form an ionic surface on the entire surface of the liquid channel including the minute part after second substrate 121 and second film 122 are bonded to each other.

Finally, liquid is injected into the above-mentioned channels of second chip 120. The liquid is, for example, a liquid having a higher dielectric constant. Examples of the liquid include methanol, ethylene glycol, low concentration buffer solutions, and mixed solutions thereof.

After the injection of the liquid, second fluid inlet 125 and third fluid inlet 126 may be sealed with a cap or a seal. Further, the liquid may be injected immediately before the use of microchannel chip 100.

First chip 110 and second chip 120 are stacked such that partition wall 116 and pressure chamber 129 face each other across first film 112 (diaphragm part 141) and second film 122 (diaphragm part 142). At that time, diaphragm part 141 overlaps diaphragm part 142 (see FIG. 6). Thus, microchannel chip 100 is produced.

### [Method of Using Microchannel Chip]

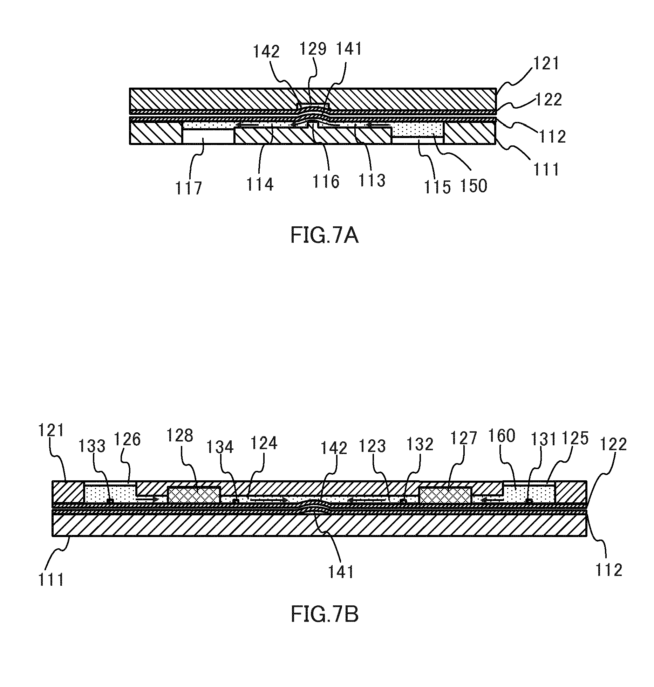

Next, the method of using microchannel chip 100 will be described with reference to FIGS. 7A and 7B. FIGS. 7A and 7B are partially enlarged sectional views of microchannel chip 100 for explaining the modes for using microchannel chip 100. FIG. 7A corresponds to FIG. 1C, and FIG. 7B to FIG. 1B.

First, as illustrated in FIG. 7A, fluid is allowed to flow in the channel of first chip 110. For example, liquid 150 such as a reagent or a liquid sample is supplied to first fluid inlet 115. At that time, the pressure inside pressure chamber 129 is not raised, and a gap is formed between first film 112 (diaphragm part 141) and partition wall 116 (valve-opened state). Liquid 150 flows from first fluid inlet 115 to fluid outlet 117 through first channel 113, the gap between partition wall 116 and first film 112 (diaphragm part 141) and second channel 114 by capillary action or an external pressure.

It is noted that the fluid supplied to first fluid inlet 115 does not need to be a liquid, and may be a gas.

When the flow of the liquid in first chip 110 is desired to be stopped, electricity is supplied to the electrodes of first electrode 131 to fourth electrode 134. Electricity can be supplied to these electrodes, for example, via a pin penetrating second substrate 121 or a pin being inserted from the side of second substrate 121 toward the electrodes.

Alternatively, it is possible to supply electricity to the electrodes, for example, via first to fourth connecting electrodes that connect first to fourth electrodes 131 to 134, respectively. Such first to fourth connecting electrodes may be formed with a conductive thin film that runs from one surface of second substrate 121 to the side surface of second substrate 121.

For example, first electrode 131 and third electrode 133 are used as positive electrodes and second electrode 132 and fourth electrode 134 are used as negative electrodes to apply a voltage to liquid 160 received in third channel 123 and fourth channel 124. The application of the voltage allows electroosmotic flow to occur in third channel 123 and fourth channel 124, as illustrated in FIG. 7B, thereby causing the flow of liquid 160 toward pressure chamber 129 to occur in third channel 123 and fourth channel 124.

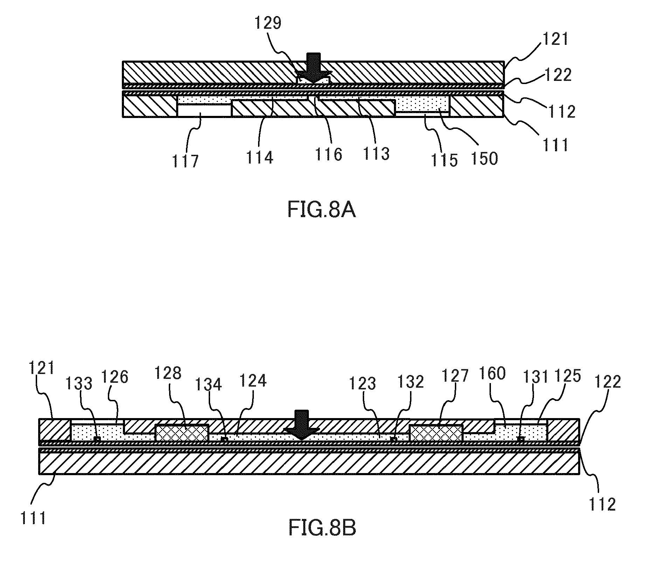

As a result, liquid 160 flows into pressure chamber 129. Then, the pressure inside pressure chamber 129 is raised. Thus, diaphragm parts 141 and 142 protruded toward the inside of pressure chamber 129 are pressed. Consequently, the shapes of diaphragm parts 141 and 142 vary, and diaphragm parts 141 and 142 are pushed toward partition wall 116, as illustrated in FIGS. 8A and 8B.

Diaphragm part 141 thus pushed out of pressure chamber 129 contacts partition wall 116. Therefore, a gap between diaphragm part 141 and partition wall 116 is sealed (valve-closed state). Thus, partition wall 116 functions as a valve seat of the micro valve. It follows that liquid 150 cannot move between partition wall 116 and first film 112 (diaphragm part 141). Accordingly, the flow of liquid 150 is stopped.

When the application of a voltage to liquid 160 from first electrode 131, second electrode 132, third electrode 133 and fourth electrode 134 is stopped, electroosmotic flow is also stopped. When the pressure inside pressure chamber 129 is lowered, a gap between diaphragm part 141 and partition wall 116 is formed again. Then, the microchannel chip comes back to the state (valve-opened state) as illustrated in FIGS. 7A and 7B. Thus, liquid 150 flows again in first chip 110.

Through the above-described procedures, it becomes possible to flow liquid 150 from first channel 113 to second channel 114, and to stop the flow of liquid 150 from first channel 113 to second channel 114 at arbitrary timing. For example, it is possible to react liquid 150 with a specific reagent for a certain period of time at the inside of first fluid inlet 115, before moving liquid 150 inside first fluid inlet 115 to the inside of fluid outlet 117, and to react liquid 150 with another reagent at the inside of fluid outlet 117.

### [Effect]

Microchannel chip 100 of the present embodiment is capable of easily controlling the flow of fluid flowing from first channel 113 to second channel 114 by adjusting the pressure of the liquid inside pressure chamber 129. The pressure inside this pressure chamber 129 can be adjusted by supplying electricity to the electrodes. Electricity can be supplied to the electrodes using a linear member such as a lead wire, a pin, or the like. These members do not require a larger installing space, and also have a higher degree of layout freedom. Further, microchannel chip 100 of the present embodiment can reduce production costs because it may be produced with a resin other than elastomer. Thus, the production costs for microchannel chip 100 of the present embodiment are made lower. Further, microchannel chip 100 of the present embodiment is capable of handling fluid without requiring an external mechanical force, and therefore can be applied to a smaller device compared to a case where an air supply device or a piezo element is used as an actuator.

Further, in microchannel chip 100 of the present embodiment, at least the surfaces of third channel 123 and fourth channel 124 of second chip 120 are covered with silicon oxide. Silicon oxide is converted into a silicate by contact with liquid. Therefore, the surfaces of third channel 123 and fourth channel 124 have ionicity, and thus stronger electroosmotic flow can be obtained compared to a case where the surfaces of third channel 123 and fourth channel 124 do not have ionicity. Therefore, the pressure inside pressure chamber 129 is increased faster. Accordingly, it is possible to carry out the closure of the channel in first chip 110 by diaphragm part 141 and partition wall 116 more quickly.

Furthermore, microchannel chip 100 of the present embodiment includes a porous part in third channel 123 and fourth channel 124, and thus, stronger electroosmotic flow can be obtained compared to a case where the porous part is not included. Therefore, the pressure inside pressure chamber 129 is increased faster. Accordingly, it is possible to carry out the closure of the channel in first chip 110 by diaphragm part 141 and partition wall 116 more quickly.

Furthermore, in microchannel chip 100 of the present embodiment, a liquid having a higher dielectric constant is injected into the channel of second chip 120, thereby enabling to obtain stronger electroosmotic flow. Therefore, the pressure inside pressure chamber 129 is increased faster. Accordingly, it is possible to carry out the closure of the channel in first chip 110 by diaphragm part 141 and partition wall 116 more quickly.

### [Modification]

While description has been given heretofore of microchannel chip 100 in which one micro valve structure including partition wall 116 and pressure chamber 129 is formed, the number of the valve structure inside microchannel chip 100 is not limited thereto. For example, a plurality of micro valve structures may be formed inside one microchannel chip 100.

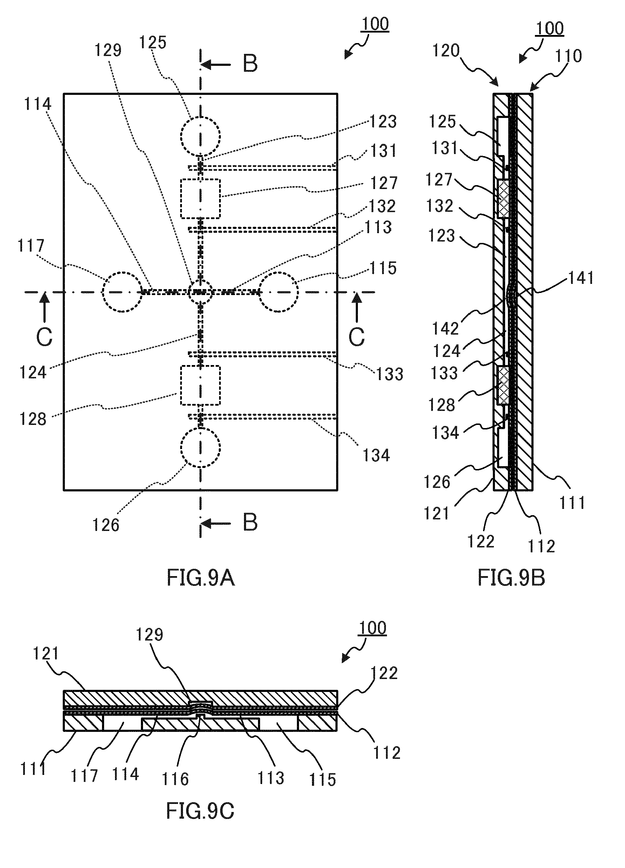

Further, while description has been given of microchannel chip 100 in which both of second fluid inlet 125 and third fluid inlet 126 are composed of through-holes of second substrate 121 in the present embodiment, the structure of microchannel chip 100 is not limited thereto. For example, as illustrated in FIGS. 9A to 9C, each of second fluid inlet 125 and third fluid inlet 126 may be composed of a recess formed in second substrate 121 and of second film 122 having a hole at the position of the recess. In this microchannel chip, when second chip 120 is stacked on first chip 110, both fluid inlets of first chip 110 and second chip 120 open downward.

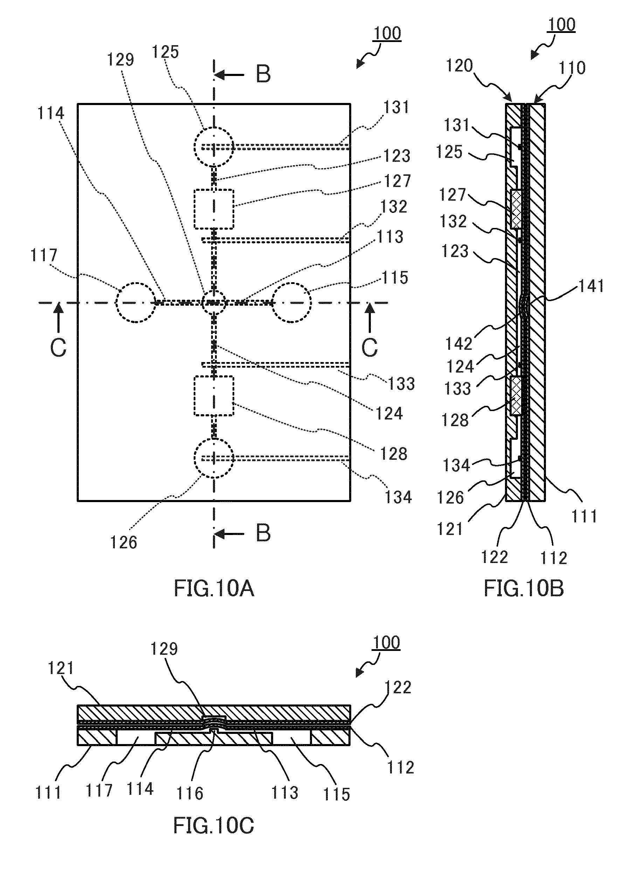

Furthermore, each of second fluid inlet 125 and third fluid inlet 126 may be composed of a recess formed in second substrate 121 and of second film 122 that seals the opening of the recess. In this microchannel chip, the above-described filling of resin beads, CVD on the surface of the liquid channel and injection of the liquid are carried out before the joining of second substrate 121 and second film 122. After injection of the liquid, second film 122 and second substrate 121 are bonded to each other, so that a microchannel chip is formed (see FIGS. 10A, 10B and 10C). In the microchannel chip, only by connecting the electrodes of second chip 120 to a power source, second chip 120 may function as an actuator for first chip 110. Accordingly, the microchannel chip is advantageous for the repetitive use of second chip 120, and also can enhance the operability of second chip 120 in the repetitive use.

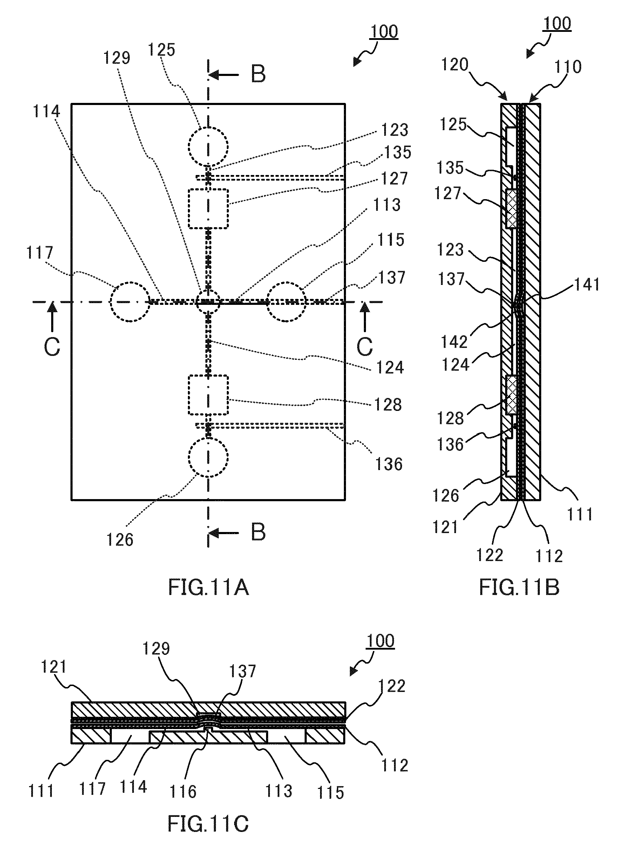

Further, while description has been given of microchannel chip 100 having a pair of electrodes (first electrode 131 and second electrode 132) in third channel 123 and a pair of electrodes (third electrode 133 and fourth electrode 134) in fourth channel 124 in the present embodiment, the structure of microchannel chip 100 is not limited thereto. For example, as illustrated in FIGS. 11A, 11B and 11C, instead of first electrode 131 to fourth electrode 134, it is also possible to provide fifth electrode 135 to be disposed in third channel 123, sixth electrode 136 to be disposed in fourth channel 123, and seventh electrode 137 to be disposed in pressure chamber 129. In this case, fifth electrode 135 and seventh electrode 137 are disposed respectively at a pair of areas to which a voltage can be applied in the longitudinal direction of third channel 123. Likewise, each of sixth electrode 136 and seventh electrode 137 is disposed at a pair of areas to which a voltage can be applied in the longitudinal direction of fourth channel 124.

All of fifth electrode 135 to seventh electrode 137 are disposed on one surface (a surface from which diaphragm part 142 is protruded) of second film 122. Fifth electrode 135 is disposed in third channel between second fluid inlet 125 and first porous part 127. The sixth electrode is disposed in the fourth channel between the third fluid inlet and second porous part 128. For example, fifth electrode 135 and sixth electrode 136 are used as positive electrodes and seventh electrode 137 is used as a negative electrode to apply a voltage to the liquid, thereby allowing electroosmotic flow of the liquid toward pressure chamber 129 to occur.

In this microchannel chip, the number of electrodes can be reduced. Further, this microchannel chip provides the same effects as that of the microchannel chip illustrated in FIGS. 11A, 11B and 11C. Furthermore, when each electrode is formed in an area from the channel or the like of second chip 120 to the side surface of second substrate 121, it becomes possible to supply electricity to the above electrodes without opening a hole in second substrate 121 or second film 122.

The embodiment of the present invention also includes microchannel chip 200 set forth below.

### [Configuration of Microchannel Chip 200]

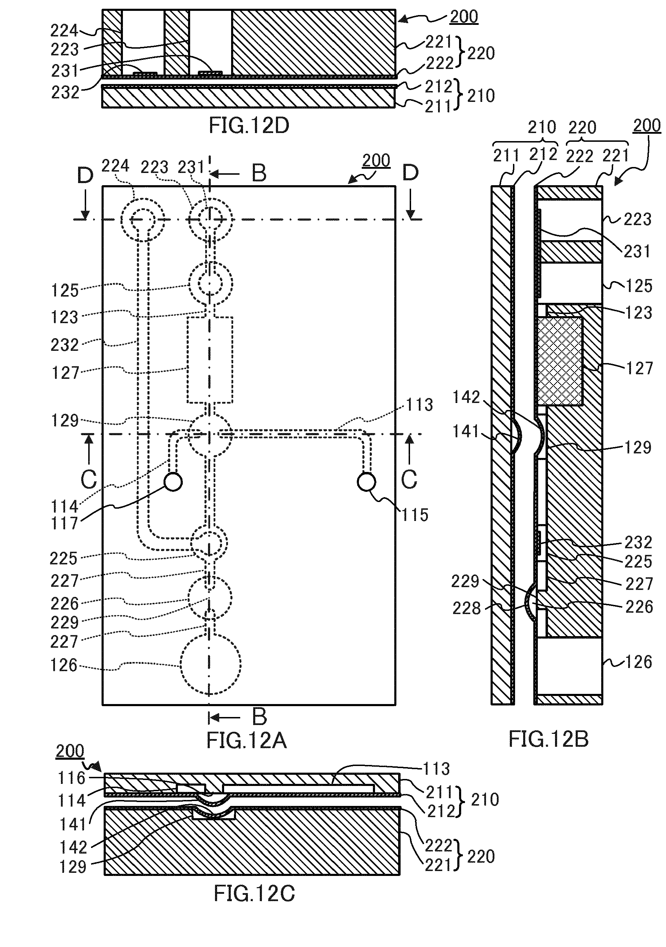

FIGS. 12A, 12B, 12C and 12D are drawings illustrating the configuration of microchannel chip 200. FIG. 12A is a plan view of microchannel chip 200, FIG. 12B is a sectional view taken along line B-B illustrated in FIG. 12A, FIG. 12C is a sectional view taken along line C-C illustrated in FIG. 12A, and FIG. 12D is a sectional view taken along line D-D illustrated in FIG. 12A. The same reference signs are allotted to the same components of microchannel chip 100, and the descriptions thereof will be omitted.

Microchannel chip 200 is composed of first chip 210 and second chip 220. First chip 210 is composed of first substrate 211 and first film 212. First chip 210 has basically the same configuration as that of the above-described first chip 110 except the shape of first channel 113.

Second chip 220 is composed of second substrate 221 and second film 222. Second chip 220 includes first electrode chamber 223 and second electrode chamber 224, second fluid inlet 125, first porous part 127, and pressure chamber 129 in the order presented from one end of second chip 220. Second fluid inlet 125, first porous part 127 and pressure chamber 129 are connected by third channel 123. First electrode chamber 223 and second electrode chamber 224 are through-holes formed in second substrate 221. First electrode chamber 223 and second electrode chamber 224 are formed alongside at one end of second substrate 221.

Second chip 220 further includes third electrode chamber 225, fluid inlet chamber 226 and third fluid inlet 126, at the end apposite to pressure chamber 129. Pressure chamber 129, third electrode chamber 225, fluid inlet chamber 226 and third fluid inlet 126 are connected by fifth channel 227. Fifth channel 227 is formed of a groove formed in second substrate 221, and is once disconnected at a position by partition wall 229 between third electrode chamber 225 and third fluid inlet 126. Third electrode chamber 225 is formed of a hollow formed in second substrate 221. Fluid inlet chamber 226 is a space covered with diaphragm part 228 to be described later.

Second chip 220 further includes eighth electrode 231 and ninth electrode 232. Eighth electrode 231 and ninth electrode 232 are formed on the surface of second film 222. Eighth electrode 231 is exposed to first electrode chamber 223 and second fluid inlet 125. Ninth electrode 232 is exposed to second electrode chamber 224 and third electrode chamber 225. Second fluid inlet 125 and third electrode chamber 225 form a pair of areas to which a voltage can be applied.

Diaphragm parts 142 and 228 are formed on second film 222. Diaphragm part 228 is formed so as to cover partition wall 229 and to be protruded from the surface of second substrate 221.

### [Method of Using Microchannel Chip 200]

First, liquid is injected (introduced) to the channel of second chip 220. The liquid is the above-mentioned liquid having a higher dielectric constant. The liquid is, for example, injected from second fluid inlet 125 to reach third fluid inlet 126 through first porous part 127, pressure chamber 129, third electrode chamber 225 and fluid inlet chamber 226.

Next, first chip 210 and second chip 220 are stacked. At that time, diaphragm parts 141 and 142 overlap each other while maintaining their shapes. Diaphragm part 228 is pressed against the planar portion of first chip 210. Therefore, diaphragm part 228 is crushed, and second film 222 (diaphragm part 228) and partition wall 229 are brought into close contact with each other. Then, the liquid channel is sealed by partition wall 229 and second film 222. Thus, there is formed a liquid channel filled with liquid, from first fluid inlet 125 to third electrode chamber 225.

Thereafter, in the same manner as in microchannel chip 100, fluid is allowed to flow in the channel of first chip 210. Then, using eighth electrode 231 and ninth electrode 232, a voltage is applied to allow electroosmotic flow to occur in the liquid channel of second chip 220, thereby raising the pressure inside pressure chamber 129. Then, the gap between diaphragm part 141 and partition wall 116 is sealed to stop the fluid flow in first chip 210.

### [Effect]

Microchannel chip 200 makes it possible to reduce the number of electrodes to only a pair of electrodes, in addition to the effects provided by microchannel chip 100, and thus it is possible to further simplify the configuration of second chip 220.

### [Modification]

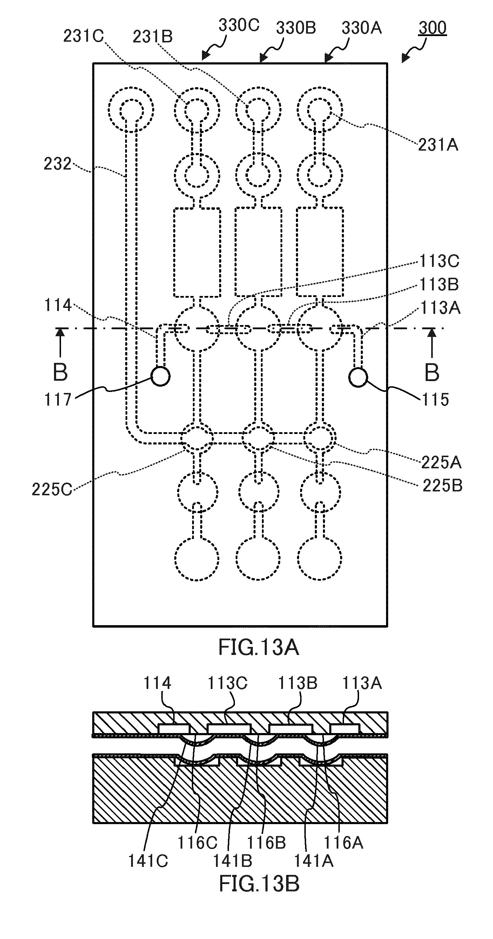

Microchannel chip 300 that is a modification of microchannel chip 200 is illustrated in FIGS. 13A and 13B. FIG. 13A is a plan view of microchannel chip 300, and FIG. 13B is a sectional view taken along line B-B illustrated in FIG. 13A.

Microchannel chip 300 has three liquid channels 330A, 330B and 330C disposed alongside on second chip 220. The same numerals as those indicated in FIGS. 12A, 12B, 12C and 12D are allotted to the respective components of the liquid channel, and signs A to C are also allotted to the respective liquid channels.

Ninth electrode 232 is exposed to each of liquid channels 330A to 330C at third electrode chambers 225A, 225B and 225C. Further, the fluid channel of first chip 210 is formed so as to be blocked by each of liquid channels 330A to 330C of second chip 220.

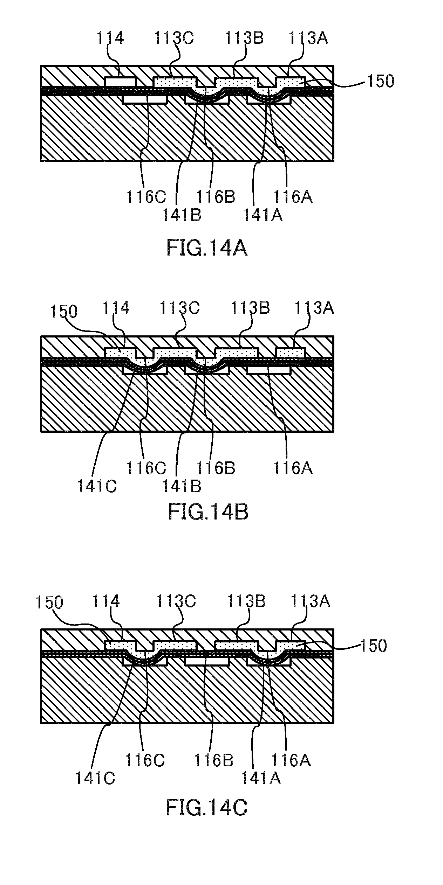

Microchannel chip 300 may be utilized as a pump by applying a voltage using eighth electrodes 231A to 231C and ninth electrode 232 and operating each of three diaphragm parts 142A to 142C. An example of using microchannel chip 300 as a pump is illustrated in FIG. 14A, 14B and 14C.

First, application of a voltage using eighth electrode 231C and ninth electrode 232 allows diaphragm part 141C to be brought into close contact with partition wall 116C to close the fluid channel. Liquid 150 fills first channels 113A to 113C (FIG. 14A).

Next, application of a voltage using eighth electrode 231A and ninth electrode 232 allows diaphragm part 141A to be brought into close contact with partition wall 116A to close the fluid channel. Further, the supply of electricity to eighth electrode 231C is stopped. Liquid 150 having filled first channels 113A to 113C moves to first channels 113B and 113C and second channel 114. In addition, the inflow of liquid 150 from first fluid inlet 115 to first channel 113B is stopped (FIG. 14B).

Next, application of a voltage using eighth electrode 231B and ninth electrode 232 allows diaphragm part 141B to be brought into close contact with partition wall 116B to close the fluid channel. Further, the supply of electricity to eighth electrode 231A is stopped. Liquid 150 inside the fluid channel moves to first channel 113C and second channel 114. In addition, new liquid 150 flows in from first fluid inlet 115 to first channels 113A and 113B (FIG. 14C).

Next, application of a voltage using eighth electrode 231C and ninth electrode 232 allows diaphragm part 141C to be brought into close contact with partition wall 116C to close the fluid channel. Further, the supply of electricity to eighth electrode 231B is stopped. Liquid 150 having been inside first channel 113C and second channel 114 moves to second channel 114. Then, new liquid 150 from first fluid inlet 115 fills first channels 113A to 113C (FIG. 14A).

Repetition of the above-described operations illustrated in FIGS. 14A to 14C makes it possible to utilize microchannel chip 300 as a micrometering pump.

The present invention also includes microchannel chip 400 as described below.

In the embodiments heretofore described, the fluid channel is designed to be closed by raising the pressure inside pressure chamber 129 to deform the shape of diaphragm part 141 of first film 212. That is, the fluid channel in a state where second chip 220 is not operated is designed to be opened, and to be closed as necessary. On the other hand, in a seventh embodiment, the fluid channel in a state where second chip 420 is not operated is designed to be closed, and to be opened as necessary. Further, microchannel chip 400 of the seventh embodiment is configured such that a voltage is applied from the side of first chip 410.

### [Configuration of Microchannel Chip 400]

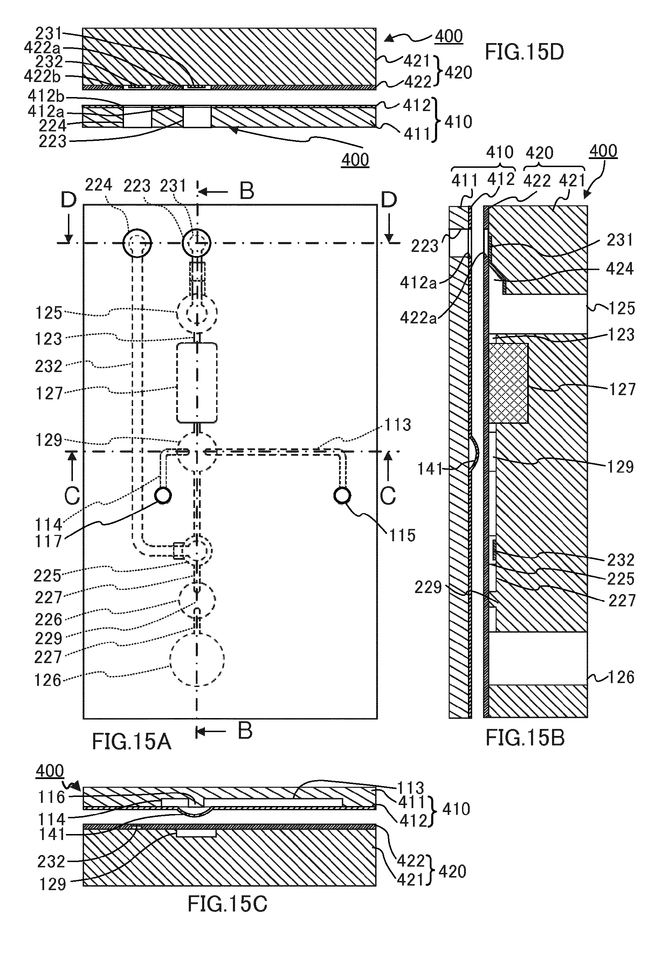

FIGS. 15A, 15B, 15C and 15D are drawings illustrating the configuration of microchannel chip 400. FIG. 15A is a plan view of microchannel chip 400, FIG. 15B is a sectional view taken along line B-B illustrated in FIG. 15A, FIG. 15C is a sectional view taken along line C-C illustrated in FIG. 15A, and FIG. 15D is a sectional view taken along line D-D illustrated in FIG. 15A. The same reference signs are allotted to the same components of microchannel chip 200, and the descriptions thereof will be omitted.

Microchannel chip 400 is composed of first chip 410 and second chip 420. First chip 410 is composed of first substrate 411 and first film 412. First substrate 411 has first electrode chamber 223 and second electrode chamber 224, in addition to the components of the above-described first substrate 211. That is, in microchannel chip 400 of the seventh embodiment, first electrode chamber 223 and second electrode chamber 224 are not formed in second substrate 421 but in first substrate 411.

First film 412 has fifth through-hole 412a and sixth through-hole 412b, in addition to the components of the above-described first film 212. Fifth through-hole 412a and sixth through-hole 412b are formed at positions corresponding to first electrode chamber 223 and second electrode chamber 224, respectively.

Second chip 420 is composed of second substrate 421 and second film 422. Second substrate 421 does not have first electrode chamber 223 and second electrode chamber 224, but has connection part 424. Connection part 424 is in communication with second fluid inlet 125. Eighth electrode 231 and ninth electrode 232 are formed on a surface of second substrate 421 at the side of second film 422. Eighth electrode 231 is exposed to first electrode chamber 223 and connection part 424. Ninth electrode 232 is exposed to second electrode chamber 224 and third electrode chamber 225.

Second film 422 is a substantially rectangular elastomer film. Second film 422 is a flat film not having diaphragm parts 142 and 228, and has seventh through-hole 422a and eighth through-hole 422b. Seventh through-hole 422a is formed at a position corresponding to first electrode chamber 223 and fifth through-hole 412a of first chip 410, and eighth through-hole 422b is formed at a position corresponding to second electrode chamber 224 and sixth through-hole 412b of first chip 410.

The type of the elastomer forming second film 422 is not particularly limited. Examples of the elastomer include silicone rubber. Further, the thickness of second film 422 is not particularly limited as long as the shape of diaphragm part 141 of first film 412 can be deformed while second chip 220 is not operated, and is appropriately designed depending on the type of the elastomer. For example, the thickness of second film 422 made of silicone rubber is about 50 to 500 µm.

Eighth electrode 231 is exposed to the side of first substrate 411 through first electrode chamber 223, fifth through-hole 412a and seventh through-hole 422a. Further, ninth electrode 232 is exposed to the side of first substrate 411 through second electrode chamber 224, sixth through-hole 412b and eighth through-hole 422b.

### [Method of Using Microchannel Chip]

First, liquid is injected (introduced) to the channel of second chip 420. The liquid is injected from second fluid inlet 125 with pressure being applied, thereby allowing the liquid to reach third fluid inlet 126 through first porous part 127, pressure chamber 129 and third electrode chamber 225. At that time, the liquid having moved inside fifth channel 227 and reached partition wall 229 pushes a part of second film 422 being in contact with partition wall 229 upward with pressure and passes through between partition wall 229 and second film 422 to reach third fluid inlet 126. When the injection of the liquid is stopped, second film 422 returns to the original position to be brought into close contact with partition wall 229. Thus, the channel from first fluid inlet 125 to third electrode chamber 225 is filled with the liquid. Further, in the same manner as in microchannel chip 100, liquid is allowed to flow in the channel of first chip 410.

Next, first chip 410 and second chip 420 are stacked. At that time, diaphragm part 141 of first film 412 is pressed against the planar portion of second film 422 to bring first film 412 (diaphragm part 141) and partition wall 116 into close contact with each other, thereby allowing the valve to be closed.

Then, a voltage is applied using eighth electrode 231 as a negative electrode and ninth electrode 232 as a positive electrode to allow electroosmotic flow to occur in the fluid channel of second chip 420, so that the inside of pressure chamber 129 is made to have a negative pressure. Thus, second film 422 is sucked into pressure chamber 129, and diaphragm part 141 is curved toward pressure chamber 129, thereby allowing the valve to be opened.

### (Effect)

Microchannel chip 400 provides the effects similar to those of microchannel chip 200. Microchannel chip 400 is designed to open the valve as necessary, and thus is capable of controlling the amount of movement of fluid and the timing for moving the fluid with high precision.

The embodiment of the present invention also includes microchannel chip 500 as described below.

### [Configuration of Microchannel Chip 500]

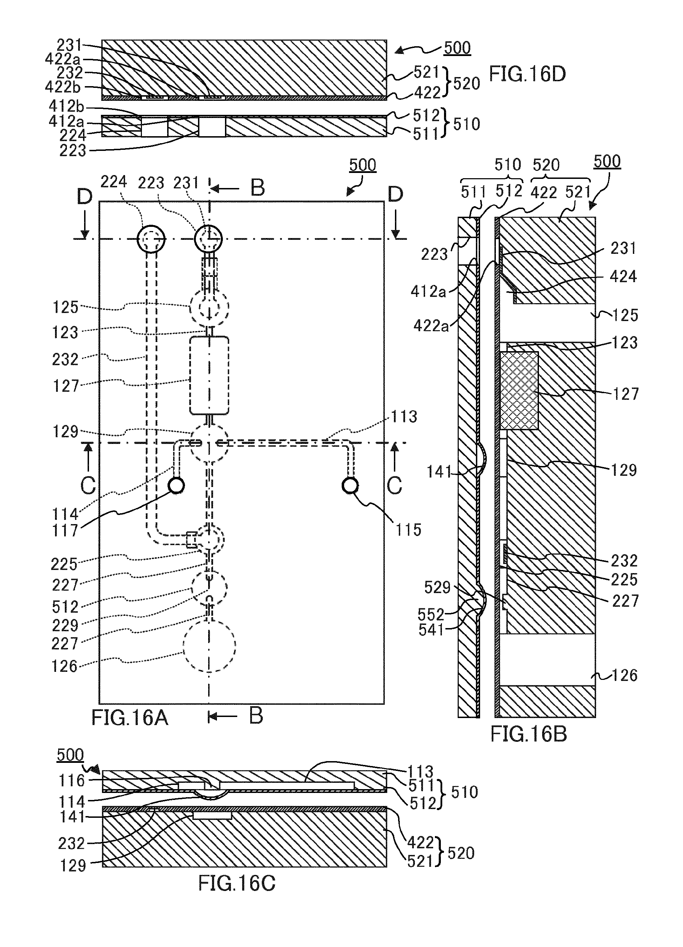

Microchannel chip 500 that is a modification of microchannel chip 400 is illustrated in FIGS. 16A, 16B, 16C and 16D. FIG. 16A is a plan view of microchannel chip 500, FIG. 16B is a sectional view taken along line B-B illustrated in FIG. 16A, FIG. 16C is a sectional view taken along line C-C illustrated in FIG. 16A, and FIG. 16D is a sectional view taken along line D-D illustrated in FIG. 16A. The same reference signs are allotted to the same components of microchannel chip 400, and the descriptions thereof will be omitted.

Microchannel chip 500 of an eighth embodiment is composed of first chip 510 and second chip 520. First substrate 511 of first chip 510 has a convex part 552 having a spherical crown shape, in addition to the components of first substrate 411 of the seventh embodiment. First film 512 of first chip 510 has diaphragm part 541 in addition to the components of first film 412. Diaphragm part 541 is formed at a position corresponding to convex part 552, and in such a size as to correspond to convex part 552. In a state where first film 512 is disposed on the surface of first substrate 511, the rear surface of diaphragm part 541 is in close contact with the surface of convex part 552.

Partition wall 529 formed on second substrate 521 of second chip 520 is formed lower than partition wall 229 of the seventh embodiment. Accordingly, in a state where second film 422 is disposed on the surface of second substrate 521, partition wall 529 and second film 422 are spaced apart.

### [Method of Using Microchannel Chip]

First, liquid is injected (introduced) to the channel of second chip 520. The liquid is, for example, injected from second fluid inlet 125, and reaches third fluid inlet 126 through first porous part 127, pressure chamber 129 and third electrode chamber 225. At that time, partition wall 529 and second film 422 are spaced apart, and thus a strong pressure does not need to be applied as in microchannel chip 400 of the seventh embodiment.

Next, first chip 510 and second chip 520 are stacked. At that time, diaphragm part 141 is crushed by second film 422. Further, a portion of second film 422 facing partition wall 529 is pressed against partition wall 529 by diaphragm part 541, thereby allowing the fluid channel to be closed by partition wall 529 and diaphragm part 541. Thus, there is formed a liquid channel filled with liquid, from first fluid inlet 125 to third electrode chamber 225.

A voltage is applied using eighth electrode 231 as a negative electrode and ninth electrode 232 as a positive electrode to allow electroosmotic flow to occur in the fluid channel of second chip 520, so that the inside of pressure chamber 129 is made to have a negative pressure. Thus, second film 422 is sucked into pressure chamber 129, and diaphragm part 141 is curved toward pressure chamber 129, thereby allowing the valve to be opened.

### (Effect)

In addition to the effects of microchannel chip 400, microchannel chip 500 enables easy injection of liquid because it is not necessary to apply pressure when injecting fluid into second chip 520.

The present application claims the priority based on Japanese Patent Application No. 2012-179290 filed on August 13, 2012 and Japanese Patent Application No. 2013-085569 filed on April 16, 2013, the disclosure each of which including the specification, drawings and abstract is incorporated herein by reference in its entirety.

### Industrial Applicability

The fluid handling device of the present invention is advantageous as a microchannel chip used, for example, in the fields of science and medicine.

### Reference Signs List

100, 200, 300, 400, 500 Microchannel chip
110, 210, 410, 510 First chip
111, 211, 411, 511 First substrate
112, 212, 412, 512 First film
113 First channel
113a First groove
114 Second channel
114a Second groove
115 First fluid inlet
115a First through-hole
116, 229, 529 Partition wall
117 Fluid outlet
117a Second through-hole
120, 220, 420, 520 Second chip
121, 221, 421, 521 Second substrate
122, 222, 422 Second film
123 Third channel
123a Third groove
123b Fourth groove
124 Fourth channel
124a Fifth groove
124b Sixth groove
125 Second fluid inlet
125a Third through-hole
126 Third fluid inlet
126a Fourth through-hole
127 First porous part
127a Second recess
128 Second porous part
128a Third recess
129 Pressure chamber
129a First recess
131 First electrode
132 Second electrode
133 Third electrode
134 Fourth electrode
135 Fifth electrode
136 Sixth electrode
137 Seventh electrode
141, 142, 228, 541 Diaphragm part
150, 160 Liquid
223 First electrode chamber
224 Second electrode chamber
225 Third electrode chamber
226 Fluid inlet chamber
227 Fifth channel
231 Eighth electrode
232 Ninth electrode
330 Liquid channel
412a Fifth through-hole
412b Sixth through-hole
422a Seventh through-hole
422b Eighth through-hole
424 Connection part
552 Convex part

## Claims

1. A fluid handling device comprising:
a first chip including a first substrate having a first groove on one surface, a first film bonded on the one surface of the first substrate, and a partition wall disposed inside a fluid channel composed of the first film and the first groove; and
a second chip including a second substrate having on one surface a second groove and a recess to be in communication with the second groove, a second film bonded on the one surface of the second substrate, and at least a pair of areas to which a voltage can be applied in a longitudinal direction of a liquid channel composed of the second film and the second groove, wherein:
the first chip and the second chip are stacked such that the partition wall of the first chip and the recess of the second chip face each other across the first film and the second film, and
when a voltage is applied to liquid between the at least a pair of areas inside the liquid channel, the second film that covers the recess and the first film that faces the second film are pushed toward the partition wall of the first chip by the liquid that flows into the recess of the second chip due to electroosmotic flow, and the first film contacts the partition wall of the first chip so as to close the fluid channel.

2. A fluid handling device comprising:
a first chip including a first substrate having a first groove on one surface, a first film made of resin bonded on the one surface of the first substrate, and a partition wall disposed inside a fluid channel composed of the first film and the first groove; and
a second chip including a second substrate having on one surface a second groove and a recess to be in communication with the second groove, a second film made of elastomer bonded on the one surface of the second substrate, and at least a pair of areas to which a voltage can be applied in a longitudinal direction of a liquid channel composed of the second film and the second groove, wherein:
the first chip and the second chip are stacked such that the partition wall of the first chip and the recess of the second chip face each other across the first film and the second film, and
when a voltage is applied to liquid between the at least a pair of areas inside the liquid channel, the liquid flows out of the recess of the second chip due to electroosmotic flow and an inside of the recess of the second chip is made to have a negative pressure to cause the second film that covers the recess to be sucked into the recess and to cause the first film to be curved toward the recess, and a gap is formed between the first film and the partition wall of the first chip so as to open the fluid channel.

3. The fluid handling device according to claim 1 or 2, wherein an electrode is disposed in each of the at least a pair of areas to which a voltage can be applied.

4. The fluid handling device according to claim 1 or 2, wherein the second chip further includes a porous part disposed in the liquid channel.

5. The fluid handling device according to any one of claims 1 to 4, wherein the liquid channel has an ionic surface.

6. The fluid handling device according to claim 5, wherein the ionic surface is formed by means of atomic layer deposition method.

7. A method of handling fluid using the fluid handling device according to claim 1, comprising:
introducing fluid into the fluid channel; and
applying a voltage to liquid between the at least a pair of areas inside the liquid channel to allow the liquid to flow into the recess due to electroosmotic flow, wherein:
the liquid that flows into the recess pushes the second film that covers the recess and the first film that faces the second film toward the partition wall, and the first film contacts the partition wall so as to close the fluid channel.

8. A method of handling fluid using the fluid handling device according to claim 2, comprising:
introducing fluid into the fluid channel; and
applying a voltage to liquid between the at least a pair of areas inside the liquid channel to allow the liquid to flow out of the recess due to electroosmotic flow to cause an inside of the recess to have a negative pressure, wherein:
a negative pressure inside the recess causes the second film that covers the recess to be sucked into the recess and to cause the first film to be curved toward the recess, and a gap is formed between the first film and the partition wall so as to open the fluid channel.
